# EUROPÄISCHE PATENTSCHRIFT

(11) **EP 1 704 339 B1**
(45) Veröffentlichungstag und Bekanntmachung des Hinweises auf die Patenterteilung: **22.04.2009**
(21) Anmeldenummer: 04802884.9
(22) Anmeldetag: 06.12.2004
(51) Int. Cl.: F16C 35/067, F16C 19/18, B60B 27/00

(54) **AUSSENRING EINES RADLAGERS UND AXIALE SICHERUNG DES AUSSENRINGES**
OUTER RING OF A WHEEL BEARING, AND AXIAL SECURING ELEMENT FOR SAID OUTER RING
CHEMIN DE ROULEMENT EXTERIEUR D'UN ROULEMENT DE ROUE ET FIXATION AXIALE DU ROULEMENT EXTERIEUR

(30) Priorität: 18.12.2003 DE 10359644
(43) Veröffentlichungstag der Anmeldung: 27.09.2006
(73) Patentinhaber: Schaeffler KG, 91074 Herzogenaurach (DE)
(72) Erfinder: NIEBLING, Peter, 97688 Bad Kissingen (DE); HEIM, Jens, 97493 Bergrheinfeld (DE); HOFMANN, Heinrich, 97422 Schweinfurt (DE); LANGER, Roland, 97523 Schwanfeld (DE); DLUGAI, Darius, 97421 Schweinfurt (DE); DÖPPLING, Horst, 91074 Herzogenaurach (DE); STEINBERGER, Wolfgang, 91074 Herzogenaurach (DE)
(86) Internationale Anmeldenummer: PCT/DE2004/002676
(87) Internationale Veröffentlichungsnummer: WO 2005/059389

(56) Entgegenhaltungen:
- EP-A- 0 561 437
- WO-A-95/13198
- GB-A- 2 272 028
- US-A- 3 749 416
- US-A- 4 729 252

## Beschreibung

### Gebiet der Erfindung

Die Erfindung betrifft einen Außenring eines Radlagers mit einem radialen Flansch, wobei sich der Flansch axial endseitig des rohrförmig ausgebildeten Außenringes radial nach außen erstreckt (vergleiche als nächstkommenden Stand der Technik das Dokument US 3749416 A), und eine axiale Sicherung des Außenringes an einem Radträger (vergleiche als nächstkommenden Stand der Technik das Dokument WO 95/13 198 A).

### Hintergrund der Erfindung

In DE39 40 395 A1 sind übliche Anordnungen von Radlagerungen beschrieben. Radlagerungen sind entweder vollständig in einem Radträger o. ä. aufgenommen oder sind an einem Flansch aufgehängt. Untersuchungen ergaben, dass sich die Radmodule mit Radlagern, die in der Regel über einen Flansch am Außenring am Radträger aufgehängt sind, einen höheren Gewichtsanteil an den ungefederten Massen aufweisen, als Radlagerungen, die in einer Bohrung eines Radträgers angeordnet sind. Die Konstruktion der am Radträger aufgehängten und somit zumindest teilweise freitragenden Radlager und deren Aufhängung ist besonders steif zu gestalten, woraus sich der erhöhte Gewichtsanteil im Vergleich zu den in Bohrungen aufgenommenen Radlagerungen ergibt.

So beschreibt DE 39 40 395 A1 eine Radlagerung mit einem Außenring, Wälzkörpern und zwei Innenringen, bei der der Außenring axial zwischen den Stirnseiten und von den Stirnseiten weg einen radialen Flansch aufweist mit dem die Radlagerung aufgehängt ist. Das Radlager ist über den Flansch axial und radial am Radträger fest. Ein sich dem Flansch axial anschließender hohlzylindrischer Abschnitt des Außenringes sitzt in einem Loch des Trägers, so dass das der Außenring mittels des Flansches axial und zumindest mit dem Abschnitt zumindest teilweise radial an dem Träger anliegt. Der Gewichtsanteil des massiv ausgebildeten Flansches an dem Außenring ist relativ hoch. Das wirkt sich nachteilig auf das Gesamtgewicht der ungefederten Massen eines Radmoduls am Fahrzeug aus.

DE 39 40 395 A1 beschreibt weiter ein Radlager, dass vollständig in einem Loch eines Radträgers aufgenommen ist. Der Außenring ist massiv ausgebildet durch spanabhebende Bearbeitung hergestellt. Ein in der Wälzlagerbranche üblicher Presssitz sichert den Außenring in dem Loch. Bei Belastungen des Radlagers im Fahrbetrieb neigt der Außenring trotz des Presssitzes zum axialen Wandern. Dagegen ist der Außenring axial an einer Seite mit einem Sicherungsring in dem Loch gesichert und stützt sich an der anderen Seite an einer Innenschulter ab. Die Vorbereitung eines derartigen Lagersitzes ist aufwendig, da die Schulter spanabhebende Bearbeitungen in axiale Richtung erschwert. Weiterhin ist der Einstich für den Sicherungsring einzubringen. Oft lockert sich auch der Presssitz im Fahrbetrieb, so dass am Träger oder am Außenring Kerben durch Verschleiß entstehen und/oder die bekannten und unerwünschten Knackgeräusche durch die Mikrobewegungen des Außenringes zum Träger auftreten. Das Gewicht des massiven Außenringes wirkt sich nachteilig auf die Gesamtbilanz der am Fahrzeug ungefederten Massen aus.

### Zusammenfassung der Erfindung

Die Aufgabe der Erfindung ist es daher, einen Außenring für eine Radlagereinheit zu schaffen, mit dessen Einbau in die Radlagereinheit die zuvor genannten Nachteile vermieden sind.

Diese Aufgabe ist nach dem Gegenstand des Anspruches 1 gelöst.

Der Flansch weist, anstelle von Durchgangslöchern, axial durch den Flansch hindurchgehende sowie radial nach außen offene Ausnehmungen für die Befestigung des Flansches an einem Radträger auf. Der Gewichtsanteil am Gesamtgewicht des Flansches ist somit erheblich reduziert, da das Material eines die Ausnehmungen üblicherweise außen umschließenden Ringabschnittes des Flansches entfällt. Die Erfindung sieht vor, dass die Ausnehmungen kreisbogenförmig gestaltet sind, oder aber sich radial von außen schlitzartig in Richtung der Rotationsachse des Radlagers erstrecken.

Bei der Herstellung eines derartigen Flansches wird zum Beispiel der zunächst mit Durchgangslöchern versehene Flansch von außen solange spanabhebend bearbeitet, bis der überflüssige, die Löcher radial außen begrenzende Anteil an Material von dem Flansch entfernt ist. Alternativ dazu wird die erfindungsgemäße Kontur des Flansches durch Stanzen erzeugt. Das ist insbesondere dann von Vorteil, wenn der Außenring kalt geformt ist. Eine spanabhebende Entfernen des Randes ist somit überflüssig. Die Ausnehmungen und auch die übrigen radial von außen zugänglichen Abschnitte des Flansches weisen in diesem Fall einen Stanzrand aus einem Stanzvorgang zum Schneiden wenigstens der Ausnehmungen auf.

Der Flansch ist dabei axial zwischen den Stirnseiten des Flansches und dabei zu den Stirnseiten axial beabstandet, ausgebildet oder an dem Außenring befestigt. Dabei ist das Radlager mittels des Flansches an dem Radträger o. ä. aufgehängt oder zumindest teilweise radial in dem Radträger radial abgestützt.

Eine bevorzugte Ausgestaltung der Erfindung sieht alternativ vor, dass der Abschnitt des Außenringes, an dem zumindest teilweise Laufbahnen für die Reihen ausgebildet sind, radial in dem Radträger abgestützt ist. Dadurch ist in der Regel das gesamte Radlager von dem Radträger umfasst. Der Flansch ist axial endseitig des Außenringes ausgebildet und geht an einem Ende der Bohrung radial nach außen ab. Der Flansch liegt entweder direkt axial an dem Radträger an oder stützt sich über Distanzmittel axial an dem Radträger ab. Über den Flansch ist das Radlager axial in dem Loch zum Träger gesichert, da der Flansch mit geeigneten Mitteln an dem Flansch befestigt ist. Das axiale Wandern des Außenringes im Fahrbetrieb ist vermieden. Außerdem ist die Kehle an dem Übergang vom Flansch zu dem Außenring entlastet, da der Außenring sich unter Last radial in dem Radträger abstützt.

Unter Radträger sind in diesem Sinne alle Anschlusskonstruktionen für Radlagermodule und Radlagereinheiten angetriebener und nicht angetriebener Räder zu verstehen, an/in denen die Radlagermodule bzw. Radlagereinheiten befestigt sind. Die gegossenen oder geschmiedeten bzw. auf andere geeignete Art hergestellten Radträger sind aus allen denkbaren Materialien, also aus Stahl und/oder zumindest um das Loch zur Aufnahme der Radlagerung aus Aluminiumlegierungen hergestellt. Ein gemäß Erfindung mittels des Flansches des Außenringes am Radträger axial festes Radlager ist axial auch fest, wenn sich der Radialsitz des Radlagers z.B. in einem Träger aus einer Aluminiumlegierung radial aufgrund der anfangs erwähnten Einflussfaktoren gelockert hat.

Unter Radlager sind in diesem Sinne alle ein-, zwei- und mehrreihigen Radlager mit Rollen und/oder Kugeln als Wälzkörper, mit einem oder mehr ein- bzw. mehrteiligen Innenringen zu verstehen, die in den unterschiedlichsten Anordnungen, wie in Radial- oder Schrägkugellageranordnung bzw. wie in Radial- oder Schrägrollenlageranordnung ausgeführt sind. Alternativ ist eine oder sind alle der Innenlaufbahnen nicht an einem/mehreren Innenringen sondern direkt an einer in dem Radlager gelagerten Nabe ausgebildet.

Die Nabe eines Radlagermoduls für ein getriebenes oder nicht getriebenes Rad ist vor dem Einbau der Radlagerung in den Radträger in dem Radlager zum Beispiel durch einen Bördelbord an dem Lager fest. Der Bördelbord hintergreift dabei die Lageranordnung so, dass die Nabe untrennbar von dem Radlager an dem Radlager fest ist. Alternativ dazu wird die Nabe bzw. ein Bolzen, mit dem das Rad in der Radlagerung drehbar zum Radträger gelagert ist, erst eingesetzt, wenn das Radlager an dem Träger fest ist.

Die Radlagerung für die Lagerung angetriebener und/oder nicht angetriebener Räder an Fahrzeugen ist mit dem Außenring so in den Radträger eingebaut, dass der Flansch des Außenringes zum Fahrzeug hin oder vom Fahrzeug weg weist. An Radlagerungen, mit denen angetriebene Räder gelagert werden, liegt der Flansch des Außenringes alternativ entweder an der Seite des Radträgers an, die dem Radflansch zugewandt ist oder der Flansch liegt an einer Seite des Radträgers an, die von dem Radflansch abgewandt ist.

Eine vorteilhafte Ausgestaltung der Erfindung sieht vor, dass der Außenring relativ dünnwandig und somit im Vergleich zu dem steifen, das Loch umgebende Gehäuse elastisch ist. Die Wand des Außenringes weist dünne Querschnitte auf. So ist der Außenring, insbesondere ein durch Kaltumformen gefertigter, partiell gehärteter oder insgesamt gehärteter Ring oder ein beliebig gefertigter Außenring ohne spanabhebende Nacharbeit nach dem Härten, als Einzelteil außen und insbesondere innen an den Laufbahnen so in sich instabil oder unrund, dass die für den Wälzkontakt notwendige optimale Geometrie zunächst nicht verwirklicht ist. Das betrifft insbesondere den Durchmesser und die Rundheit des quer zur Rotationsachse betrachteten Abschnittes, mit dem der Außenring in das Loch eingepresst ist, vor der Montage in den Radträger. Unter optimaler Geometrie ist in diesem Falle die Rundheit der Laufbahnen im Wälzkontakt zu verstehen, die optimale Wälzverhältnisse im Lager absichert. Derartige Formgenauigkeiten werden üblicherweise an massiven spanabhebend bearbeiteten Lagerringen und den Gehäusebohrungen zur Aufnahme der Lagerringe durch Drehen und Schleifen erzeugt. Die Herstellung derartiger Geometrie ist zeitaufwändig und teuer. Die Erfindung sieht jedoch vor, dass die fertige Kontur des Außenringes, zumindest an dem Abschnitt, die genannten Abweichungen von der optimalen Geometrie aufweist. Das Loch des Trägers entspricht aufgrund seiner durch Spanabheben erzeugten Geometrie den optimalen Anforderungen.

Die Abweichungen der Außenkontur des Außenringes von der optimalen Geometrie werden durch das elastische - teils plastische Verhalten des Außenringes ausgeglichen, wenn der Außenring in das Loch eingepresst ist. Dazu weist der Außenring zunächst wenigsten an dem Abschnitt einen Außendurchmesser auf, der größer ist als der Innendurchmesser des Loches. Das Übermaß ist auch für den Presssitz erforderlich, mit dem der Außenring im Träger sitzt. Durch das Einpressen das Loch schnürt sich der Außenring radial nach innen ein und passt sich den Rundheiten des Loches an. Die Formgenauigkeiten des Loches und auch das Übermaß übertragen sich nahezu vollständig auf die Geometrie der Laufbahnen, da das Gehäuse des Trägers im Vergleich zum Außenring starr ist. Das Loch in dem vergleichsweise zu dem Außenring starren Radträger weist, wenn das Radlager in dem Loch sitzt, im Wesentlichen seine Ausgangsgeometrie vor dem Einpressen des Radlagers auf. Die funktionsbedingten Rundheiten an der Laufbahn sind an dem Außenring somit erst dann hergestellt, wenn der Außenring in das Loch eingepresst ist. Außerdem ist die elastische Formänderung u. a. auch für die notwendige Spielfreiheit der Radlagerung vorteilhaft, wenn das Radlager komplett als Einheit montiert wird.

Der dünnwandige Außenring ist mit dem Flansch vorzugsweise einteilig ausgebildet, der Flansch kann aber auch an dem Außenring durch Schweißen oder durch einen kraftschlüssigen und/oder formschlüssigen Sitz befestigt sein. Eine Ausgestaltung der Erfindung sieht vor, dass der Außenring aus umgeformten Material gebildet ist. Die Gestalt des Außenringes mit allen seinen Formelementen ist demnach durch Umformen hergestellt. Trennende oder spanabhebende Bearbeitung ist nur auf einen sehr geringen Umfang der Bearbeitung im Vergleich zum Umfang der spanlosen Bearbeitung begrenzt. So sind durch Trennen bzw. Lochen nur überschüssiges Material, Ränder, Grate oder weiter Ähnliches vom Formteil entfernt. Spanabhebend sind gegebenenfalls nur die Laufbahnen durch Feinbearbeitung wie Schleifen, Läppen oder Polieren nachgearbeitet. Unter dem Begriff Kaltumformen sind alle die Umformverfahren zu verstehen, bei denen die Kontur des hohlen Außenringes durch Dehnen oder Stauchen, Aufweiten bzw. Einschnüren und dabei plastische Formänderung des Ausgangsmateriales ohne Werkstofftrennung herstellbar sind. Derartige Verfahren sind z. B. Ziehen, Tiefziehen, Rollieren, Pressen und Kombinationen der vorgenannten Verfahren.

Als Rohlinge für die Herstellung der Außenringe sind z. B. Rohre und Bleche vorgesehen. Ein Rohling aus einem Rohr ist durch Aufweiten, Rollieren, Einschnüren, Stauchen und Umlegen von Rändern zu dem fertigen Außenring bearbeitet. Aus Blech hergestellte Außenringe sind durch Ziehen und weitere einzelne bzw. Kombinationen der vorgenannten Verfahren hergestellt. In diesem Fall sieht eine Ausgestaltung der Erfindung vor, dass der Flansch axial von der Stirnseite des Außenringes bis an den Radträger, an dem der Flansch anliegt, genauso breit ist wie das Ausgangsmaterial des Bleches vor dem Herstellen des Außenringes dick war. Bevorzugte Werkstoffe sind kaltformbare Lagerwerkstoffe wie z. B. 100Cr6 oder auch alle geeigneten Tiefziehstähle.

Der Außenring zeichnet sich durch ein geringes Gewicht aus, da Ausgangsmaterial geringer Wandstärke bzw. geringer Blechdicke eingesetzt ist. Die Stärke bzw. Dicke des Ausgangsmateriales liegt vorzugsweise im Bereich von 2, 4 bis 5 mm. Mit dem dünnwandigen Außenring aus spanabhebender oder spanloser Herstellung ist der Gesamtanteil der Radlagereinheit an dem Gewicht der ungefederten Massen reduziert.

Der Flansch ist vorzugsweise mit Bolzen, die zum Beispiel in den Radträger eingeschraubt oder eingepresst werden, an dem Radträger befestigt. Denkbar sind auch andere Befestigungselemente, wie Klammern oder ähnliches die den Flansch an einer von dem Radträger axial abgewandten Seite des Flansches an wenigstens einem Befestigungsrand hintergreifen. Alternativ dazu sind an dem Radträger durch Schweißen oder Einschrauben befestigte Bolzen vorgesehen, auf die jeweils eine Mutter aufgeschraubt und gegen den Flansch axial vorgespannt ist. Die Bolzen durchgreifen axiale Ausnehmungen an dem Flansch. Dabei liegt der Kopf eines jeden der Bolzen zugleich axial an dem Radträger und an dem Flansch an. Die gleichmäßige Anlage der Köpfe ist durch in einer gemeinsamen Ebene liegende Axialflächen an dem Radträger und an dem Flansch des Außenringes abgesichert. Der Radträger weist dazu von der stirnseitigen Anlagefläche, an der der Flansch axial an dem Radträger anliegt axial hervorstehende Vorsprünge auf. Die Vorsprünge ragen axial soweit hervor, dass die an den Vorsprüngen stirnseitig ausgebildete Axialfläche axial mit der von dem Träger abgewandten Axialfläche an dem Flansch in einer Ebene liegt.

Alternativ zu den axialen Vorsprüngen ist der Radträger mit einem umlaufenden oder auch in Umfangsrichtung unterbrochenen Ringabschnitt versehen. Der Ringabschnitt umfasst den Flansch radial außen. Die Köpfe der Befestigungsmittel liegen an diesem axialen Ringabschnitt gemeinsam an.

Die konkave Kontur der Kehle zwischen dem Flansch und dem Außenring geht, in einem Längsschnitt durch den Außenring entlang der Rotationsachse des Außenringes betrachtet, an einem ersten Übergang z. B in eine Kreisringfläche des Flansches und an einem zweiten Übergang z.B. in eine zylindrische Mantelfläche des Abschnittes über. Der erste und der zweite Übergang enden alternativ zum Beispiel jeweils in einer freistichartig geformten Ringnut in dem Flansch bzw. in dem Abschnitt. Dabei ist von besonderer Bedeutung, das ein senkrechte Abstand zwischen einer gedachten axialen Verlängerung der Mantelfläche des Flansches und dem ersten Übergang kleiner ist als ein zur Rotationsachse paralleler Abstand zwischen einer gedachten radialen Verlängerung der Mantelfläche und dem zweiten Übergang.

Die Kehle ist dabei vorteilhaft durch wenigstens zwei aufeinander folgende Radien zwischen den Übergängen beschrieben. wobei wenigstens ein erster Radius radial an dem Übergang in den Flansch und wenigsten ein zweiter Radius axial an dem Übergang in den ersten Abschnitt übergeht. Die Radien sind in dem Längsschnitt in Richtung der Übergänge entweder durch eine Gerade vonelnander getrennt, oder gehen vorzugsweise zwischen dem Flansch und dem Abschnitt ineinander über.

Der Außenring ist zumindest abschnittsweise zumindest radial zur Rotationsachse in dem Radträger so abgestützt, dass der axial endseltig des Außenringes ausgebildete Flansch axial an dem Radträger und radial an dem Außenring anliegt, ohne dass der Träger Kontakt zur Kehle hat. Zusätzliche Spannungen in der Kehle durch den Einfluss von scharfen Kanten des Trägers ist auch durch eine ausreichend dimensionierte Fase an dem Loch vermieden.

Weitere Ausgestaltungen der Erfindung sowie Ausführungsformen der Erfindung sind in den Figuren 1 bis 12 näher beschrieben. Es zeigen im einzelnen:
- Figur 1: ein Radlagermodul im Längsschnitt;
- Figuren 2, 2a, 2b: einen Außenring, Formabweichungen des Außenrings, die Formabweichung einer Kehle des Außenrings;
- Figuren 3 und 4: ein Radmodul in verschiedenen Frontansichten;
- Figur 5: ein Radlager mit einem Radflansch;
- Figur 6: ein Radlager für ein nicht angetriebenes Fahrzeugrad;
- Figur 7: einen Radflansch;
- Figur 8: einen Außenring mit einem radialen Flansch;
- Figuren 9 und 10: ein Radlager in einem Radträger;
- Figuren 11 und 12: ein Radlager in einem alternativ gestalteten Radträger,
wobei die Figuren 1 bis 4 nicht alle Merkmale der unabhängigen Ansprüche zeigen.

### Detailllerte Beschreibung der Zeichnungen

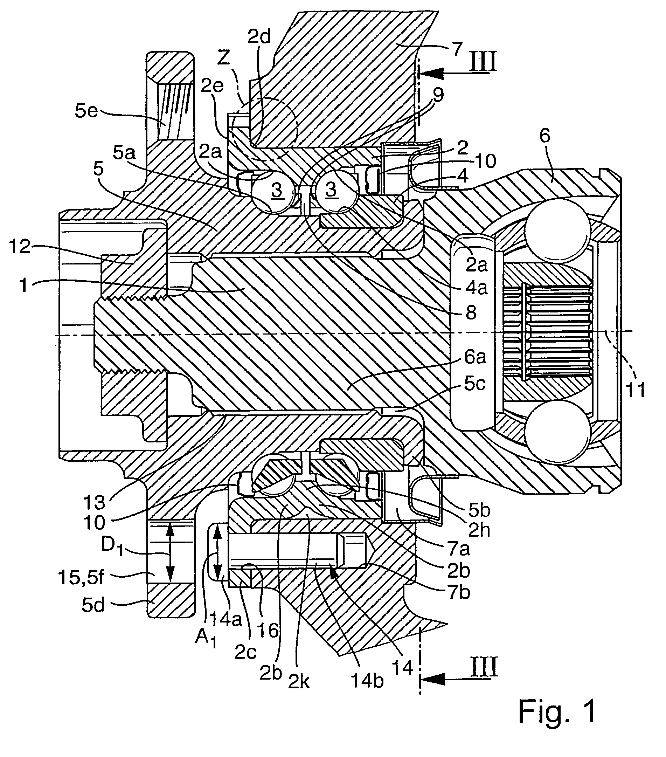

Figur 1 zeigt ein Radiagermodul 1 in einem Längsschnitt entlang einer Rotationsachse 11. Das Radiagermodul ist mit einem Außenring 2, mit zwei Reihen Wälzkörper 3, mit einem Innenring 4, mit einer Nabe 5 und mit einer Gelenkglocke 6 versehen. Die aus den Einzelteilen 2, 3, 4, 5, 6 vormontierte Baueinheit des Radlagermoduls sitzt in einem Radträger 7.

Das Radlager 8 aus dem Außenring 2, den Wälzkörpern 3, in diesem Beispiel in Form von Kugeln, aus Käfigen 9, Dichtungen 10, dem Innenring 4 und aus der Nabe 5 ist in sich selbst haltend vormontiert. Dazu sind die Wälzkörper 3 und der Innenring 4 mittels der Nabe 5 in dem Außenring 2 gehalten. Eine Reihe der Wälzkörper 3 stützt sich dabei an einer Laufbahn 2a des Außenringes 2 und an einer direkt an der Nabe 5 ausgebildeten Laufbahn 5a ab. Die andere Reihe der Wälzkörper 3 ist zwischen einer weiteren Laufbahn 2a und einer Laufbahn 4a des Innenringes 4 angeordnet. Das Radlager 8 ist mittels eines Bördelbordes 5b an der Nabe 5 über den Innenring 4 und den Außenring 2 spielfrei vorgespannt - zumindest dann, wenn das Radlager 8 in dem Radträger 7 montiert ist. Die Nabe 5 ist über den Bördelbord 5b unlösbar zum Radlager 8 fest.

Die Nabe 5 ist um eine Rotationsachse 11 im wesentlichen rotationssymmetrisch ausgebildet und weist ein axiales Durchgangsloch 5c auf. Ein Stummel 6a an der Gelenkglocke 6 durchgreift das Durchgangsloch 5c axial. Die Gelenkglocke 6 ist über eine Mutter 12 axial an der Nabe 5 gesichert. An der Nabe 5 ist ein radial nach außen weisender Radflansch 5d ausgebildet. Über Zahnprofile 13 an dem Stummel 6a sowie an der Nabe 5 ist eine um die Rotationsachse 11 drehfeste Verbindung zwischen der Gelenkglocke 6 und dem Radflansch 5d hergestellt.

An dem Radflansch 5d sind axiale Löcher 5e ausgebildet, in die nicht dargestellte Radbolzen zur Befestigung eines Fahrzeugesrades eingreifen. Weiterhin weist der Radflansch 5d axiale Ausnehmungen 5f auf, die zumindest einmal pro Umdrehung des Radflansches 5d um die Rotationsachse 11, einem Flansch 2c axial so gegenüber liegen, dass der Radflansch 5d aufgrund der Ausnehmungen 5f das Befestigungselement 14 axial nicht verdeckt. Der Durchmesser D₁ der als axiales Durchgangsloch 15 ausgeführten Ausnehmung 5f ist größer als die größte radiale Abmessung A₁ des Kopfes 14a.

Der Außenring 2 ist aus zwei hohlzylindrischen Abschnitten 2b und aus dem radialen Flansch 2c gebildet. Das Radlager 8 ist über die Abschnitte 2b in einem Loch 7a des Radträgers 7 radial abgestützt. Der Außenring 2 geht an einem der Abschnitte 2b über eine Kehle 2d radial in den Flansch 2c über. Der Flansch 2c liegt axial außen an dem Radträger 7 an und ist an der von dem Radträger 7 axial abgewandten Seite 2e von den Befestigungselementen 14 in Form von Bolzen hintergriffen. Das Befestigungselement 14 ist mit dem Kopf 14a axial fest gegen den Flansch 2c vorgespannt, da ein an dem Bolzen fester Schaft 14b axial in einem Befestigungsloch 7b des Radträgers 7 fest ist. Die Befestigungselemente 14 sind in die Befestigungslöcher 7b wahlweise eingepresst bzw. eingeschraubt.

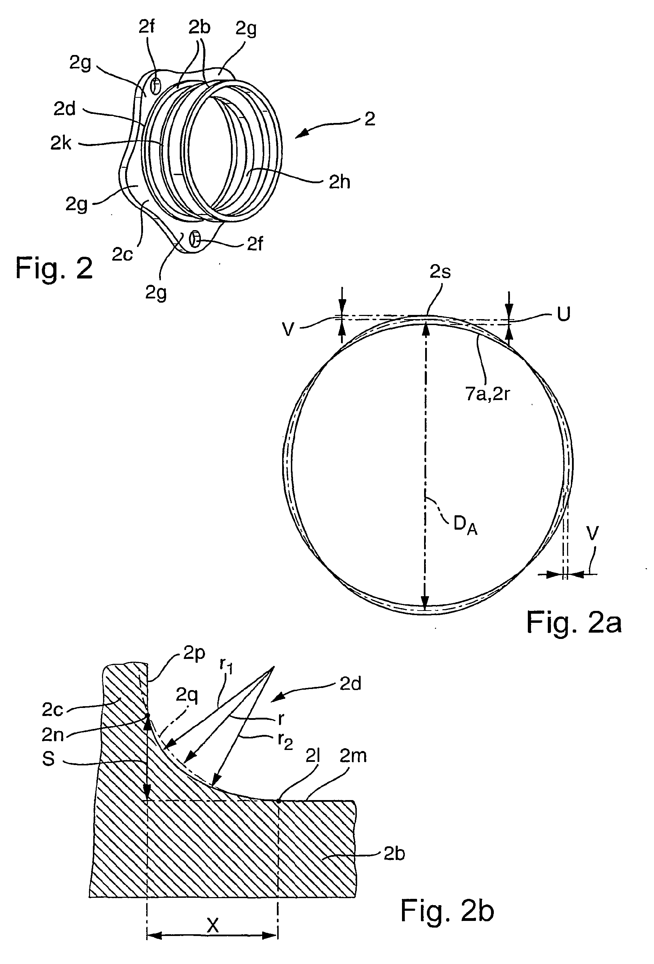

Figur 2 zeigt den Außenring 2 in einer Vollansicht. Der Außenring 2 ist ein durch Kaltumformen hergestelltes Bauteil, dessen Flansch 2c radial hervorstehende Abschnitte 2g aufweist. In drei der Abschnitte 2g sind die Außennehmungen 2f als axiale Durchgangslöcher 16 eingebracht.

In Figur 2a zeigt die Formabweichungen des Außenringes 2 als Einzelteil im Vergleich zu der Innengeometrie 2r des Loches 7a. Der Außenring 2 weist aufgrund seiner dünnen Wand nach dem Kaltumformen eine Außengeometrie 2r auf, deren Durchmesser D_{A} zunächst um das Übermaß 2 x U größer ist als der Innendurchmesser Dₗ des Loches 7a. Zusätzlich weicht die Außengeometrie 2s um das Maß 2 x V von der Innengeometrie 2r des Befestigungsloches 7b ab. Nach der Montage des Außenringes 2 in das Befestigungsloch 7b ist der Außenring 2 soweit eingeschnürt, dass die Außengeometrie 2s dem Durchmesser D₁ und der Innengeometrie 2r im wesentlichen entspricht.

Der Außenring 2 weist eine Radialschulter 2h auf. Die Radialschulter 2h ist zwischen den Laufbahnen 2a angeordnet, wobei die Laufbahnen 2a zumindest teilweise an der Radialschulter 2h ausgebildet sind. In den Außenring 2 ist radial von außen eine Ringnut 2k eingebracht. Die Ringnut 2k ist zum einen durch das Verdrängen von Material aus dem Außenring 2 zum Formen der Radialschulter 2h entstanden und verleiht zum anderen dem Außenring 2 im Bereich der Laufbahnen 2a eine gewisse Elastizität.

In Figur 2b, einer vergrößerten Darstellung des Details Z aus Figur 1, ist die Kehle 2d stark vergrößert und nicht maßstäblich dargestellt. Die Kehle 2d ist konkav ausgebildet und geht an einem ersten Übergang 2l in eine kreiszylindrische Mantelfläche 2m des Abschnittes 2b über. An dem Flansch 2c geht die Kehle 2d an dem Übergang 2n in eine kreisringförmige Fläche 2p über. Der senkrechte Abstand S zwischen der gedachten axialen Verlängerung der Mantelfläche 2m und dem Übergang 2n ist kleiner als ein zur Rotationsachse 11 paralleler Abstand X zwischen einer gedachten radialen Verlängerung der Kreisringfläche 2p und dem Übergang 2l.

Figur 2b zeigt auch, dass die Kontur der Kehle 2d in einem Längsschnitt durch den Außenring 2 von einer mit Strichpunktlinien dargestellten und durch einen Radius r beschriebenen Kontur 2q abweicht. Die Kehle 2d ist in dem Längsschnitt durch die Radien r₁ und r₂ beschrieben. Der Radius r₁ geht an dem Übergang 2n in den Flansch 2c und der Radius r₂ geht axial an dem Übergang 2l in den Abschnitt 2b über. Die Radien r₁ sowie r₂ gehen zwischen dem Flansch 2c und dem Abschnitt 2b ineinander über.

Der Radträger 7 liegt axial so an dem Flansch 2c und radial an dem Abschnitt 2b so an, dass der Radträger 7 und die Kehle 2d mindestens bis zu den Übergängen 2l und 2n zueinander beabstandet sind. Die Maximalspannungen radial unterhalb der Ausnehmungen 2f sind an der durch den Radius r beschriebenen Kontur 2q etwas um ein Drittel höher als die Spannungen in einer Kehle 2d, die durch die Radien r₁ und r₂ beschrieben ist.

Der Radflansch 5d liegt dem Flansch 2c axial gegenüber und steht radial weiter hervor als der Flansch 2c (Figur 1), so dass der Flansch 2c zunächst von dem Radflansch 5d axial in Richtung des Radträgers 7 verdeckt ist.

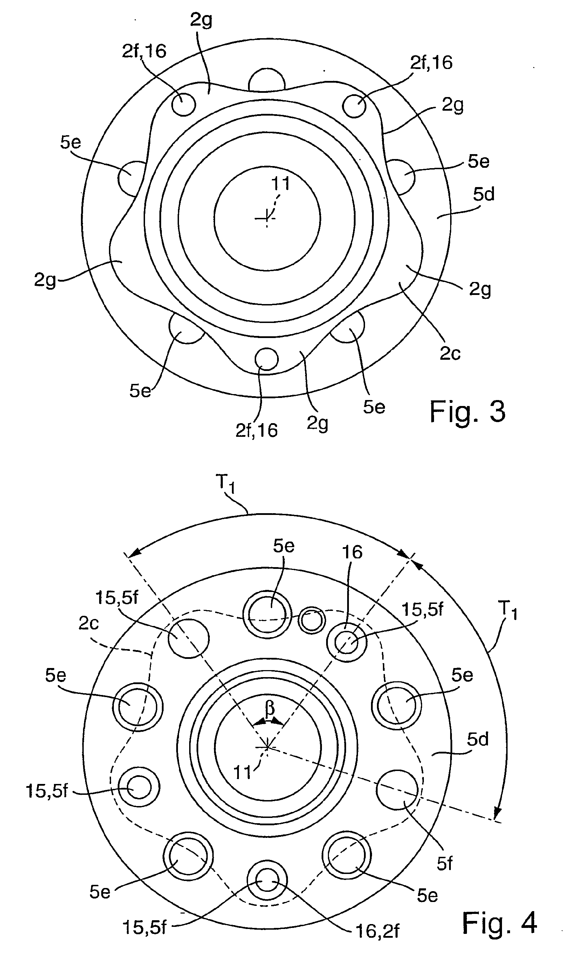

Figur 3 und Figur 4 zeigen das Radlagermodul 1 in verschiedenen Frontalansichten. In Figur 3 ist das Radlagermodul 1, ohne Gelenkglocke und ohne Radträger, entlang der Linie III - III in die mit den Pfeilen markierte Richtung nach Figur 1 abgebildet. In Figur 4 ist das Radlagermodul 1 in einer zu Figur 3 entgegengesetzten Ansicht mit Sicht auf den Radflansch 5d in Richtung des Radträgers 7 dargestellt. Insbesondere aus Figur 4 ist ersichtlich, dass der Radflansch 5d axial in Richtung des Radträgers den Flansch 2c am Außenring 2 vollständig verdeckt - jedoch liegt jeweils eine der Außennehmungen 5f, zeitgleich zu den anderen Ausnehmungen 5f, an dem Radflansch 5d einmal pro Umdrehung des Radflansches 5d um die Rotationsachse 11 so axial gegenüber, dass der Radflansch 5d den Flansch 2c an den Ausnehmungen 2f und an den Rändern der Ausnehmungen 2f axial nicht verdeckt.

Unter den Rändern de Ausnehmung ist der sich den Ausnehmungen anschließende Bereich zu verstehen, an dem die Befestigungselemente an de m Flansch anliegen. Die Ausnehmungen 5f sind deshalb mindestens so groß gestaltet, dass das Befestigungsmittel 14 mit Kopf und auch ein die Befestigungsmittel 14 am Kopf 14a umgreifendes Werkzeug axial durch die Ausnehmungen 5f geführt werden kann.

Die Ausnehmungen 5f sind mit gleicher Teilung T₁ um die Rotationsachse 11 zueinander verteilt, wobei die Teilung T₁ durch den Winkel β in diesem Falle β = 72°, vorgegeben ist.

Die Löcher 5e in dem Radflansch 5d sind jeweils mit einem Innengewinde 5g versehen (Fig. 1), in das die Radbolzen eingeschraubt werden. Es ist denkbar, Löcher 5e ohne Innengewinde gleichzeitig für den axialen Zugriff auf die Löcher 16 zu nutzen. Dies ist deshalb möglich, da ein alle Löcher 15 außen umfassender Außenhüllkreis größer ist als ein alle Löcher 16 außen umgreifender Außenhüllkreis und ein an allen Löchern 15 innen anliegender Hüllkreis kleiner ist als ein an allen Löchern 16 anliegender Innenhüllkreis.

Die Anzahl der Ausnehmungen 5f am Radflansch 5d (in diesem Fall 5 Stück) ist größer als die Anzahl der Ausnehmungen (in diesem Falle 3 Stück) 2f an dem Flansch 2c. Die Anzahl der Ausnehmungen kann aber auch übereinstimmen. Wie aus Figur 4 ersichtlich ist, liegt jede der überzähligen Ausnehmungen 5f in einem der Abschnitte 2g ohne Löcher 16 zeitgleich zu den anderen Ausnehmungen 5f axial gegenüber. Diese beiden Abschnitte 2g, die ohne die Ausnehmung 2f sind, wie insbesondere aus Figur 3 ersichtlich ist, sind für die Anlage von Axialstützen für den Flansch 2 beim Erpressen in das Loch 7a des Radträgers vorgesehen. Dabei durchgreifen die Axialstützen axial zwei der Ausnehmungen 5f.

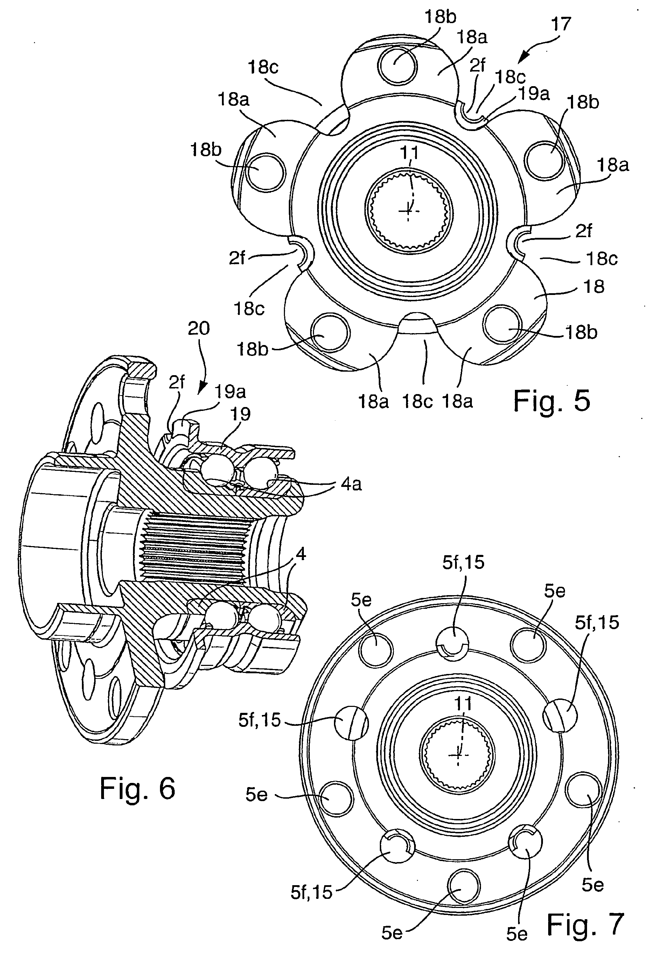

Figur 5 zeigt ein Radlager 17 mit einem Radflansch 18. Radial hervorstehende Abschnitte 18a des Flansches weisen axiale Löcher 18b auf, in die nicht dargestellte Radbolzen zur Befestigung eines Fahrzeugrades eingreifen. Zwischen jeweils zwei der umfangsseitig zueinander benachbarten Abschnitte 18a ist jeweils eine der erfindungsgemäßen Ausnehmungen 18c nach außen offen an dem Radflansch ausgebildet. Der Flansch 19a weist anstelle von axialen Durchgangslöchern radial nach außen offene kreisbogenförmige Ausnehmungen 2f auf. Der Radflansch 18 ist gegenüber dem Flansch 19a so in Position um die Rotationsachse 11 gedreht, dass die Ausnehmungen 2f in axiale mit der Rotationsachse 11 gleich gerichtete Richtung nicht von dem Radflansch 18 verdeckt sind.

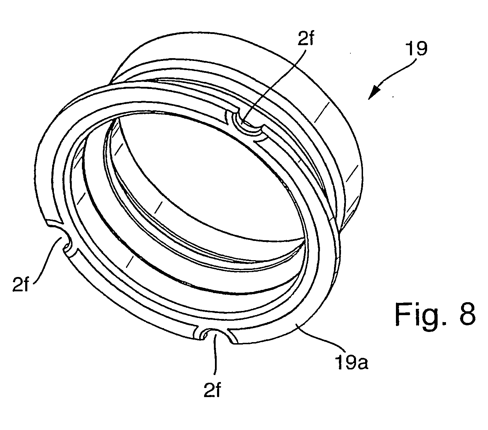

Figur 6 zeigt ein Radlager 20 für ein nicht angetriebenes Fahrzeugrad, in dem wahlweise verschiedene Radflansche gelagert sein können, mit einem Außenring 19 aus spanloser Herstellung. Der Außenring 19 ist in Figur 8 als Einzelteil in einer Gesamtansicht dargestellt und weist den radialen Flansch 19a mit den kreisbogenförmig ausgebildeten Ausnehmungen 2f auf. Das Radlager 20 weist zwei der Innenringe 4 auf, an denen jeweils eine der Laufbahnen 4a ausgebildet ist.

Figur 7 zeigt einen Radflansch, bei dem die als Löcher 15 ausgebildeten Ausnehmungen 5f radial näher zur Rotationsachse 11 liegen als die Löcher 5e zur Aufnahme der Radbolzen. Sowohl die Löcher 15 als auch die Löcher 5e sind mit der gleichen Teilung umfangsseitig zur Rotationsachse 11 verteilt.

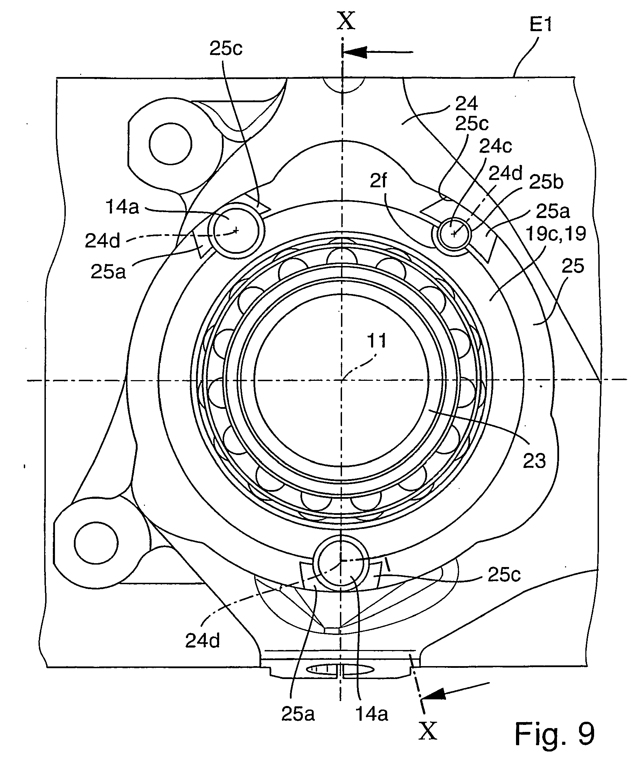

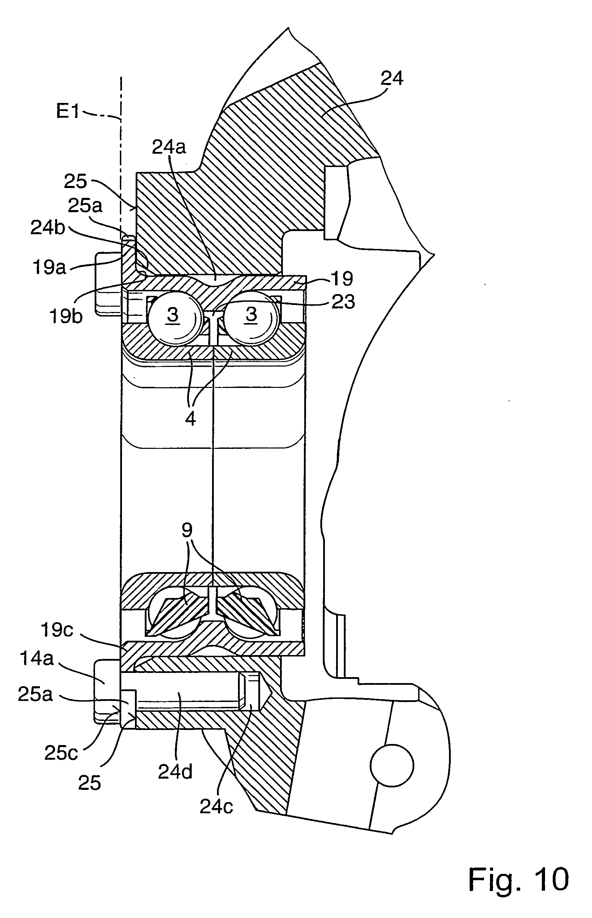

Die Figuren 9 und 10 zeigen ein Radlager 23 in einem Radträger 24. Figur 9 zeigt eine Frontalansicht des Radlagers 23 in dem Radträger 24 ohne einen Radflansch. Figur 10 zeigt einen Längsschnitt durch die Einheit entlang der Linie X - X aus Figur 9. Das Radlager 23 weist den Außenring 19, die Wälzkörper 3, Käfige 9 und zwei der Innenringe 4 auf. Der Außenring 19 sitzt radial unterstützt in einem Durchgangsloch 24a des Radträgers. Radseitig des Radträgers 24 schließt sich dem Durchgangsloch 24a eine Fase 24b an. Die Fase 24b ist ausreichend dimensioniert, so dass eine Kehle 19b an dem Übergang vom Außenring 19 zum Flansch 19a vom Radträger 24 nicht berührt ist (Figur 10).

Der Radträger 24 weist eine Planfläche 25 auf, an der der Flansch 19a axial anliegt. Aus der Planfläche stehen axial Vorsprünge 25a hervor. Die Vorsprünge 25a schließen sich radial an den Flansch 19a dort an, wo der Flansch 19a die axialen Außennehmungen 2f aufweist. Die axialen Vorsprünge 25a weisen bogenförmig gestaltete axiale Aussparungen 25b auf, die in Befestigungslöcher 24c in dem Radträger 24 übergehen. Jeweils ein Befestigungselement 14 sitzt fest in einem der Befestigungslöcher 24c des Radträgers und ist von jeweils einer Ausnehmung 2f und der Aussparung 25b des jeweiligen Vorsprunges 25a umgriffen. Jede der Mittenachsen 24d der Befestigungslöcher 24c verläuft gleichgerichtet mit der Rotationsachse 11 radial zwischen einer Ausnehmung 2f und einer Aussparung 25b. Der Kopf 14a des Befestigungselementes 14 liegt axial an Axialflächen 25c und 19c an. Die an dem Flansch 19a ausgebildete Axialfläche und die an dem Vorsprung 25a ausgebildete Axialfläche 25c liegen dabei in einer gemeinsamen Ebene E1.

Eine Ausgestaltung der Erfindung sieht vor, dass die Axialfläche 25c vor dem Einbringen der Befestigungselemente 14 in die Befestigungslöcher 24c zunächst ca. 0,05 mm bis 0,2 mm axial über die Axialfläche 25c hervorsteht. Beim Einführen und Befestigen der Befestigungselemente 14 in den Befestigungslöchern 24c, zum Beispiel durch Einschrauben, wird der Flansch 19a axial soweit elastisch bzw. plastisch verformt, dass die Axialflächen 25c und 19c gemeinsam in der Ebene E1 liegen. Eine dauerhafte axiale Sicherung des Außenringes 19 an dem Radträger 24 ist hergestellt.

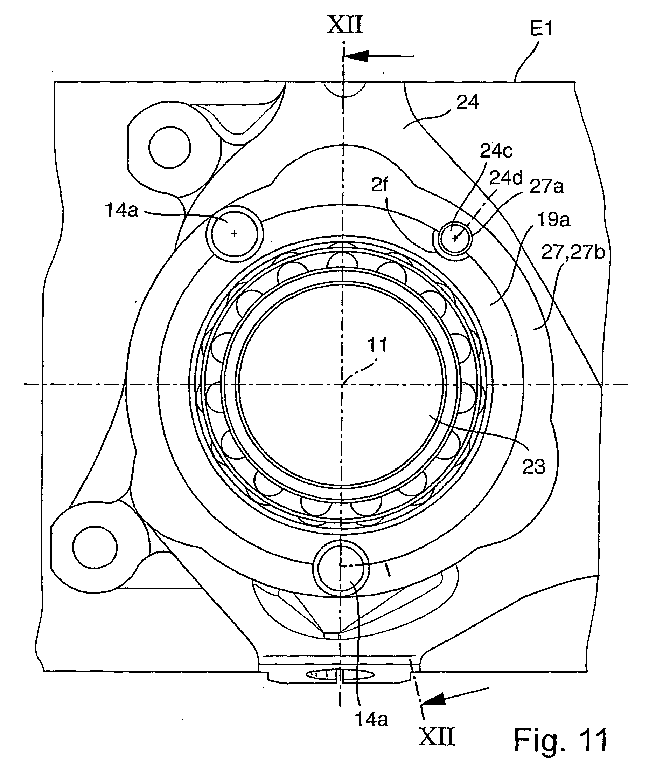

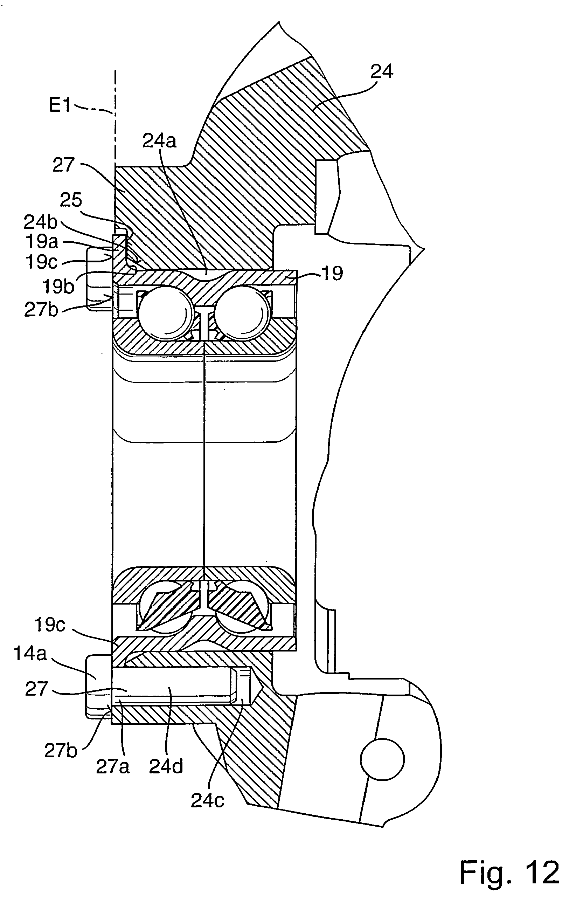

Die Figuren 11 und 12 zeigen das Radlager 23 in einem alternativ zu den Darstellungen nach Figur 9 und 10 gestalteten Radträger 24. Figur 11 zeigt eine Frontalansicht des Radlagers 23 in dem Radträger 24 ohne einen Radflansch. Figur 12 zeigt einen Längsschnitt durch die Einheit entlang der Linie XII - XII aus Figur 11.

Der Radträger 24 weist eine Planfläche 25 auf, an der der Flansch 19a axial anliegt. Über die Planfläche 25 steht axial ein Ringabschnitt 27 hervor. Der Ringabschnitt 27 umgreift den Flansch 19a und weist sich den Ausnehmungen 2f radial anschließende sowie bogenförmig gestaltete axiale Aussparungen 27a auf, die in Befestigungslöcher 24c in dem Radträger 24 übergehen. Jeweils ein Befestigungselement 14 sitzt fest in einem der Befestigungslöcher 24c des Radträgers und ist von jeweils einer Ausnehmung 2f und der Aussparung 27a umgriffen. Der Kopf 14a jedes Befestigungselementes 14 liegt axial an einer Axialfläche 27b des Ringabschnittes 27 und gleichzeitig an der Axialfläche 19c des Flansches 19a an. Die an dem Flansch 19a ausgebildete Axialfläche 19c und die Axialfläche 27b liegen dabei in der gemeinsamen Ebene E1.

### Bezugszeichen

- 1: Radlagermodul
- 2: Außenring
- 2a: Laufbahn
- 2b: Abschnitt
- 2c: Flansch
- 2d: Kehle
- 2e: Seite
- 2f: Ausnehmung
- 2g: Abschnitt
- 2h: Radialschulter
- 2k: Ringnut
- 2l: Übergang
- 2m: Mantelfläche
- 2n: Übergang
- 2p: Fläche
- 2q: Kontur
- 2r: Innengeometrie
- 2s: Außengeometrie
- 3: Wälzkörper
- 4: Innenring
- 4a: Laufbahn
- 5: Nabe
- 5a: Laufbahn
- 5b: Bördelbord
- 5c: Durchgangsloch
- 5d: Radflansch
- 5e: Löcher
- 5f: Ausnehmung
- 6: Gelenkglocke

- 6a: Stummel
- 7: Radträger
- 7a: Loch
- 7b: Befestigungsloch
- 8: Radlager
- 9: Käfig
- 10: Dichtung
- 11: Rotationsachse
- 12: Mutter
- 13: Zahnprofil
- 14: Befestigungselement
- 14a: Kopf
- 14b: Schaft
- 15: Loch
- 16: Loch
- 17: Radlager
- 18: Radflansch
- 18a: Abschnitt
- 18b: Loch
- 19: Außenring
- 19a: Flansch
- 19b: Kehle
- 19c: Axialfläche
- 20: Radlager
- 21: Radflansch
- 22: Außenring
- 22a: Flansch
- 22b: Kreisringfläche
- 23: Radlager

- 24: Radträger
- 24a: Durchgangsloch
- 24b: Fase
- 24c: Befestigungsloch
- 24d: Mittenachse
- 25: Planfläche
- 25a: Vorsprung
- 25b: Aussparung
- 25c: Axialfläche
- 27: Ringabschnitt
- 27a: Aussparung
- 27b: Axialfläche

## Patentansprüche

1. Außenring (2, 19) eines Radlagers (8, 23) mit einem radialem Flansch (2c, 19a), wobei sich der Flansch (2c, 19a) axial endseitig des rohrförmig ausgebildeten Außenringes (8, 19) radial nach außen erstreckt und dabei der Flansch (2c, 19a) axial durch den Flansch (2c, 19a) hindurchgehende Ausnehmungen (2f) für die Befestigung des Flansches (2c, 19a) an einem Radträger (7, 24) aufweist,
**dadurch gekennzeichnet, dass**
die Ausnehmung (2f) kreisbogenförmig sowie radial nach außen offen gestaltet sind, oder sich radial von außen schlitzartig in Richtung der Rotationsachse des Radlagers erstrecken.

2. Außenring nach Anspruch 1, wobei der Außenring kalt (2, 19) geformt ist.

3. Außenring nach Anspruch 1 an einem Radlager (8, 23), wobei der Außenring (2) zumindest teilweise in einem Radträger (7, 24) radial gestützt ist und dabei der Flansch (2c) axial mit Befestigungselementen (14) zu dem Radträger (7, 24) fest ist, wobei der Flansch (2c) von den Befestigungselementen (14) an einer von dem Radträger (7, 24) axial abgewandten Seite (2e) des Flansches (2c) hintergriffen und **dadurch** axial an dem Radträger (7, 24) axial gehalten ist.

4. Außenring nach Anspruch 3, bei dem die Ausnehmungen (2f) von Bolzen durchgriffen sind, wobei die Befestigungsmittel (14) die Bolzen sind.

5. Außenring nach Anspruch 4, bei dem die Befestigungsmittel (14) Köpfe (14) der Bolzen sind.

6. Außenring nach Anspruch 1, bei dem der Flansch (2c) an dem Radträger (7, 24) zumindest abschnittweise axial anliegt.

7. Axiale Sicherung eines Außenringes (2) eines Radlagers (23) an einem Radträger (24) bei der der Außenring (2) mit einem radialem Flansch (2c) axial an dem Radträger (24) anliegt und dabei der Flansch (2c) axial mit Befestigungselementen (14) zu dem Radträger (24) fest ist, wobei der Flansch (2c) von den Befestigungselementen (14) an einer von dem Radträger (24) axial abgewandten Seite (2e) des Flansches (2c) hintergriffen und **dadurch** axial an dem Radträger (24) axial gehalten ist und wobei jedes der Befestigungselemente (14) zugleich axial an dem Radträger (24) und an dem Flansch (2c) anliegt.

8. Axiale Sicherung nach Anspruch 7, bei der die Befestigungselemente (14) Bolzen mit Köpfen (14a) sind, wobei jeder der Bolzen in dem Radträger fest (24) ist und den Flansch (2c) an der von dem Radträger (24) abgewandten Seite an dem Flansch (2c) mit einem Kopf (14a) hintergreift und dabei der Kopf (14a) gleichzeitig sowohl axial an dem Flansch (2c) als auch an dem Radträger (24) anliegt.

9. Axiale Sicherung nach Anspruch 8, bei der jeder der Köpfe (14a) an einem axialem Vorsprung (25a) des Radträgers (7) axial anliegt, wobei die Vorsprünge (25a) sich radial an den Flansch (2c) anschließen.

10. Axiale Sicherung nach Anspruch 8, bei der die Köpfe (14a) an einem gemeinsamen axialen Ringabschnitt (27) des Trägers (24) anliegen, wobei der Ringabschnitt (27) den Flansch (2c) umfangsseitig umfasst.

## Claims

1. Outer ring (2, 19) of a wheel bearing (8, 23) having a radial flange (2c, 19a), the flange (2c, 19a) extending radially outward at the axial end of the outer ring (8, 19) of tubular configuration, and the flange (2c, 19a) having recesses (2f) here which pass axially through the flange (2c, 19a) for fastening the flange (2c, 19a) to a wheel carrier (7, 24), **characterized in that** the recesses (2f) are of arcuate design as well as open radially to the outside, or extend radially outward in the manner of a slot in the direction of the rotation axis of the wheel bearing.

2. Outer ring according to Claim 1, the outer ring (2, 19) being cold formed.

3. Outer ring according to Claim 1 on a wheel bearing (8, 23), the outer ring (2) being supported radially at least partially in a wheel carrier (7, 24) and the flange (2c) being fixed axially here to the wheel carrier (7, 24) by way of fastening elements (14), the flange (2c) being engaged behind by the fastening elements (14) on a side (2e) of the flange (2c) which faces axially away from the wheel carrier (7, 24) and, as a result, being held axially on the wheel carrier (7, 24) axially.

4. Outer ring according to Claim 3, in which bolts reach through the recesses (2f), the fastening elements (14) being the bolts.

5. Outer ring according to Claim 4, in which the fastening elements (14) are heads (14) of the bolts.

6. Outer ring according to Claim 1, in which the flange (2c) bears axially against the wheel carrier (7, 24) at least in sections.

7. Axial securing means of an outer ring (2) of a wheel bearing (23) on a wheel carrier (24), in which the outer ring (2) bears axially against the wheel carrier (24) with a radial flange (2c) and the flange (2c) is fixed axially here to the wheel carrier (24) by way of fastening elements (14), the flange (2c) being engaged behind by the fastening elements (14) on a side (2e) of the flange (2c) which faces axially away from the wheel carrier (24) and, as a result, being held axially on the wheel carrier (24) axially, and each of the fastening elements (14) at the same time bearing axially against the wheel carrier (24) and against the flange (2c).

8. Axial securing means according to Claim 7, in which the fastening elements (14) are bolts with heads (14a), each of the bolts being fixed in the wheel carrier (24) and engaging behind the flange (2c) with a head (14a) on that side on the flange (2c) which faces away from the wheel carrier (24), and the head (14a) bearing here at the same time both axially against the flange (2c) and against the wheel carrier (24).

9. Axial securing means according to Claim 8, in which each of the heads (14a) bears axially against an axial projection (25a) of the wheel carrier (7), the projections (25a) adjoining the flange (2c) radially.

10. Axial securing means according to Claim 8, in which the heads (14a) bear against a common axial annular section (27) of the carrier (24), the annular section (27) surrounding the flange (2c) circumferentially.

## Revendications

1. Bague extérieure (2, 19) d'un palier de roue (8, 23), comprenant une bride radiale (2c, 19a), la bride (2c, 19a) s'étendant radialement vers l'extérieur, axialement du côté de l'extrémité de la bague extérieure (8, 19) réalisée sous forme tubulaire, et la bride (2c, 19a) présentant en l'occurrence des évidements (2f) traversant axialement la bride (2c, 19a) pour la fixation de la bride (2c, 19a) à un support de roue (7, 24), **caractérisée en ce que** les évidements (2f) sont formés en forme d'arc de cercle et sont ouverts radialement vers l'extérieur, ou s'étendent radialement depuis l'extérieur en forme de fente dans la direction de l'axe de rotation du palier de roue.

2. Bague extérieure selon la revendication 1, dans laquelle la bague extérieure (2, 19) est façonnée à froid.

3. Bague extérieure selon la revendication 1, sur un palier de roue (8, 23), dans laquelle la bague extérieure (2) est supportée radialement au moins en partie dans un support de roue (7, 24) et en l'occurrence la bride (2c) est fixée axialement avec des éléments de fixation (14) au support de roue (7, 24), la bride (2c) étant saisie par l'arrière par les éléments de fixation (14) d'un côté (2e) de la bride (2c) opposé axialement au support de roue (7, 24) et étant de ce fait maintenue axialement au support de roue (7, 24).

4. Bague extérieure selon la revendication 3, dans laquelle les évidements (2f) sont saisis par des boulons, les moyens de fixation (14) étant les boulons.

5. Bague extérieure selon la revendication 4, dans laquelle les moyens de fixation (14) sont des têtes (14) des boulons.

6. Bague extérieure selon la revendication 1, dans laquelle la bride (2c) s'applique axialement contre le support de roue (7, 24), au moins en partie.

7. Fixation axiale d'une bague extérieure (2) d'un palier de roue (23) sur un support de roue (24), dans laquelle la bague extérieure (2) s'applique avec une bride radiale (2c) axialement contre le support de roue (24) et en l'occurrence la bride (2c) est fixée axialement avec des éléments de fixation (14) au support de roue (24), la bride (2c) étant saisie par l'arrière par les éléments de fixation (14) d'un côté (2e) de la bride (2c) opposé axialement au support de roue (24) et de ce fait étant maintenue axialement contre le support de roue (24), et chacun des éléments de fixation (14) s'appliquant en même temps axialement au support de roue (24) et à la bride (2c).

8. Fixation axiale selon la revendication 7, dans laquelle les éléments de fixation (14) sont des boulons avec des têtes (14a), chacun des boulons étant fixé dans le support de roue (24) et venant en prise par l'arrière avec la bride (2c) au niveau du côté de la bride (2c) opposé au support de roue (24) avec une tête (14a), et en l'occurrence la tête (14a) s'appliquant simultanément axialement contre la bride (2c) et contre le support de roue (24).

9. Fixation axiale selon la revendication 8, dans laquelle chacune des têtes (14a) s'applique axialement contre une saillie axiale (25a) du support de roue (7), les saillies (25a) se raccordant radialement à la bride (2c).

10. Fixation axiale selon la revendication 8, dans laquelle les têtes (14a) s'appliquent contre une portion annulaire axiale commune (27) du support (24), la portion annulaire (27) entourant la bride (2c) sur sa périphérie.
